# EUROPÄISCHE PATENTSCHRIFT

(11) **EP 3 243 758 B1**
(45) Veröffentlichungstag und Bekanntmachung des Hinweises auf die Patenterteilung: **30.01.2019**
(21) Anmeldenummer: 17169247.8
(22) Anmeldetag: 03.05.2017
(51) Int. Cl.: B64G 1/64

(54) **AUSWURFEINHEIT FÜR EINEN SATELLITEN**
EJECTION UNIT FOR A SATELLITE
BLOC DE LANCEMENT POUR UN SATELLITE

(30) Priorität: 10.05.2016 DE 102016108606
(43) Veröffentlichungstag der Anmeldung: 15.11.2017
(73) Patentinhaber: ECM space technologies GmbH, 10557 Berlin (DE)
(72) Erfinder: BOGDANOV, Dimitriy, 10785 Berlin (DE); SCHWARZ, Peter, 5023 Salzburg (AT); GRUBER, Johannes, 5600 St. Johann m Pongau (AT); WIMMER, Peter, 5452 Pfarrwerfen (AT); KRYUKOVSKIY, Vsevolod, 129626 Moscow (RU)
(74) Vertreter: Manitz Finsterwald Patentanwälte PartmbB

(56) Entgegenhaltungen:
- DE-A1-102006 043 660
- DE-U1-202014 008 902
- JP-A- 2011 136 620
- US-A1- 2010 090 066
- US-A1- 2014 319 283
- US-A1- 2016 031 572

## Beschreibung

Die vorliegende Erfindung betrifft eine Auswurfeinheit für zumindest einen Satelliten, insbesondere Picosatelliten, nach dem Oberbegriff des Anspruchs 1 (US2014/0319283 A1).

Beispielsweise Picosatelliten nach dem CubeSat-Standard werden gewöhnlich durch eine Rakete in einen Orbit transportiert und dort durch eine Auswurfeinheit von der Rakete ausgeworfen. Dabei werden der Satellit und die Auswurfeinheit großen Belastungen ausgesetzt, insbesondere beim Start der Rakete und beim Absprengen von Raketenteilen, wie z.B. einem größeren Hauptsatelliten.

Es ist eine Aufgabe der Erfindung, einen Satelliten in einer Auswurfeinheit der eingangs genannten Art während eines Transports zu einem Auswurfort sicher festzulegen.

Die Aufgabe wird durch eine Auswurfeinheit nach Anspruch 1 gelöst. Da die Auswurfeinheit eine Rückhalteeinrichtung zum Halten des Satelliten in dem Innenraum umfasst, die derart ausgebildet ist, dass der Satellit von der Rückhalteeinrichtung freigebbar ist, lässt sich der Satellit sicher in der Auswurfeinheit festlegen und am Auswurfort zuverlässig freigeben und auswerfen.

Die Rückhalteeinrichtung umfasst einen Deckel zum Verschließen des Innenraums, wobei der Deckel in einer Geschlossenstellung durch zumindest einen verschiebbaren Bolzen gegenüber dem Rahmen freigebbar gesperrt ist.

Die Verwendung des Bolzens stellt eine besonders einfache aber zuverlässige Möglichkeit dar, den Deckel gegenüber dem Rahmen zu sperren und so den Satelliten während des Transports festzulegen. Außerdem lassen sich hierdurch der Deckel und damit der Satellit zuverlässig freigeben. Des Weiteren lässt sich ein Bolzen besonders präzise und zu einem genau definierten Zeitpunkt zum Freigeben des Deckels verschieben. Durch den Bolzen wird also sichergestellt, dass der Satellit genau an einem geplanten Auswurfort ausgeworfen werden kann.

Beispielsweise greift der Bolzen in der Geschlossenstellung des Deckels in eine für den Bolzen vorgesehene Sperrausnehmung ein und ist zum Freigeben des Deckels aus der Sperrausnehmung herausziehbar. Die Sperrausnehmung kann insbesondere Teil des Rahmens oder an diesem befestigt sein.

Der Bolzen ist als Teil des Deckels ausgebildet. Dies erlaubt eine besonders kompakte Bauweise der Auswurfeinheit, insbesondere des Rahmens, wobei ein Verschiebemechanismus für den Bolzen insbesondere vollständig im Deckel untergebracht sein kann.

Beispielsweise kann der Deckel in der Geschlossenstellung derart vorgespannt gelagert sein, dass der Deckel in eine Offenstellung versetzt wird, wenn er freigegeben ist. Dadurch ist keine gesonderte Aktorik zum Öffnen des Deckels notwendig, was ein sicheres Öffnen des Deckels gewährleistet und ebenfalls eine kompakte Bauweise der Auswurfeinheit ermöglicht. Der Deckel kann beispielsweise um eine Schwenkachse aufschwenkbar sein und durch eine Torsionsfeder um die Schwenkachse vorgespannt sein. Alternativ oder zusätzlich kann der Deckel gegenüber dem Satelliten federnd abgestützt sein, so dass sich der Deckel nach der Freigabe von dem Satelliten in die Offenstellung abstößt.

Die Auswurfeinheit weist einen Freigabemechanismus auf, durch den der Bolzen aus einer Sperrstellung in eine Freigabestellung versetzbar ist. Der Freigabemechanismus kann insbesondere mit einer Redundanz versehen sein. Beispielsweise ist der Freigabemechanismus als Teil des Deckels ausgebildet, was eine kompakte Bauweise erlaubt.

Bei einer Weiterbildung umfasst der Freigabemechanismus einen mit dem Bolzen gekoppelten Schieber, der in einer Sperrstellung vorgespannt gehalten wird und aus dieser freigebbar ist, um den Bolzen in eine Freigabestellung zu verschieben. Beispielsweise ist der Bolzen durch ein Gestänge gelenkig mit dem Schieber verbunden, wobei der Schieber und das Gestänge ein Kniegelenk für den Bolzen bilden können.

Bei einer weiteren Ausführungsform sind zwei Bolzen vorgesehen. Hierdurch lässt sich der Deckel redundant, nämlich an zwei Stellen, sicher festlegen. Die Bolzen sind dabei insbesondere derart ausgerichtet, dass sie in eine jeweilige Freigabestellung gegensätzlich verschiebbar sind. Insbesondere sind die Bolzen koaxial angeordnet.

Beispielsweise ist ein oder jeder Bolzen durch eine Feder in Richtung einer Freigabestellung vorgespannt. Dabei können die Bolzen durch ein Gestänge in einer Sperrstellung kraftfrei gestellt sein. Hierdurch wird erreicht, dass in der Sperrstellung keine Kräfte auf weitere bewegliche Komponenten, insbesondere eines Freigabemechanismus, wirken. Die Bolzen werden somit besonders sicher in der Sperrstellung gehalten und ein unerwünschtes Freigeben des Deckels wird wirksam vermieden. Die Bolzen können insbesondere derart ausgerichtet sein, dass sich Rückstellkräfte der Federn im Wesentlichen ausgleichen. Alternativ oder zusätzlich können die Bolzen durch das Gestänge in der Sperrstellung derart kraftfrei gestellt sein, dass eine Mindestauslenkung des Gestänges und/oder der Bolzen dazu führt, dass die Bolzen nicht länger kraftfrei gestellt sind, so dass zumindest eine der Federn den oder die Bolzen in die Freigabestellung verschiebt. Eine derartige Ausführung erweist sich als vorteilhaft, weil hierdurch einerseits in der Sperrstellung eine sichere und kraftfreie Lagerung der Bolzen gewährleistet ist und andererseits die Federn die Freigabe des Deckels zum erwünschten Zeitpunkt zuverlässig bewirken können.

Bei einer weiteren Ausführungsform kann jeder Bolzen über ein eigenes Gestänge mit einem Schieber des Freigabemechanismus verbunden sein. Dabei können die Gestänge mit dem Schieber ein doppeltes Kniegelenk bilden, welches die Bolzen derart mit dem Schieber koppelt, dass eine Bewegung eines Bolzens in die Freigabestellung zu einer Bewegung des zweiten Bolzens in die Freigabestellung führt. Durch eine derartige Kopplung wird, insbesondere in redundanter Weise, sichergestellt, dass sich beide Bolzen zu einem erwünschten Freigabezeitpunkt in ihre Freigabestellung verschieben. Insbesondere kann zumindest eine Feder für einen Bolzen derart stark dimensioniert sein, dass sie auch bei Ausfall einer weiteren Feder eine Verschiebung beider Bolzen in die Freigabestellung bewirkt, wobei hierfür gegebenenfalls eine Mindestauslenkung des Gestänges und/oder der Bolzen nötig sein kann. Vorteilhafterweise sind zwei dieser derart stark dimensionierte Federn vorgesehen, so dass die Bolzen redundant, also mit besonders hoher Ausfallsicherheit, in ihre jeweilige Freigabestellung verschoben werden.

Der Freigabemechanismus kann zumindest einen Kipphebel umfassen, durch den der zumindest eine Bolzen mittelbar oder unmittelbar in einer Sperrstellung gehalten wird. Der Kipphebel lässt sich dabei insbesondere zur Freigabe des Bolzens aus einer Sperrstellung heraus verkippen. Beispielsweise kann der Bolzen über einen zwischen den Kipphebel und den Bolzen geschalteten Schieber gehalten werden. Insbesondere weist der Kipphebel einen ersten Hebelarm und einen zweiten Hebelarm auf, wobei in der Sperrstellung der Bolzen direkt oder indirekt an dem ersten Hebelarm abgestützt wird und an dem zweiten Hebelarm eine elektrisch ansteuerbare Halteeinrichtung wirksam ist, die durch eine elektrische Ansteuerung den zweiten Hebelarm freigibt, so dass ein vorgespanntes Element, wie z.B. der Bolzen und/oder eine mit dem ersten Hebelende verbundene Feder, den Kipphebel in eine Freigabestellung versetzt.

Eine weitere Ausführungsform zeichnet sich dadurch aus, dass zwei Kipphebel vorgesehen sind und ein vorgespanntes Element des Freigabemechanismus einen Schwenkarm umfasst, der in der Sperrstellung mit beiden Kipphebeln zum Abstützen des vorgespannten Elements in Eingriff steht, wobei der Schwenkarm derart verschwenkbar ist, dass durch Verkippen auch nur eines Kipphebels in eine Freigabestellung das vorgespannte Element und damit der Bolzen aus der Sperrstellung freigebbar sind. Diese Ausführungsform sorgt für ein redundantes und damit besonders zuverlässiges Freigeben des Deckels. Das vorgespannte Element kann insbesondere den oder die Bolzen und/oder einen Schieber umfassen.

Vorteilhaft ist es auch, wenn der zumindest eine Kipphebel ein Drehlager aufweist und durch ein vorgespanntes Element des Freigabemechanismus belastet ist, welches eine Schräge aufweist, durch die eine von dem vorgespannten Element auf den Kipphebel ausgeübte Kraft in Richtung des Drehlagers, insbesondere durch eine Drehachse des Drehlagers hindurch, verläuft. Hierdurch wird die von dem vorgespannten Element in einer Sperrstellung auf den Kipphebel ausgeübte Kraft, insbesondere im Wesentlichen vollständig, durch das Drehlager aufgenommen, so dass aus dieser Kraft zumindest in der Sperrstellung im Wesentlichen kein Moment auf den Hebel resultiert. Dies führt dazu, dass auch bei hohen mechanischen Belastungen der Auswurfeinheit, z.B. während eines Raketenstarts, das vorgespannte Element im Wesentlichen kein Moment auf den Kipphebel um seine Drehachse bewirkt und somit der Kipphebel während dieser Belastungen besonders sicher in seiner Sperrstellung gehalten werden kann.

Die erfindungsgemäße Auswurfeinheit lässt sich auch dadurch weiter verbessern, dass der Bolzen eine Schräge zum Auflaufen auf ein rahmenseitiges Gegenlager für den Bolzen in der Sperrstellung aufweist. Dies verhindert, dass der Bolzen an dem Gegenlager hängen bleibt, obwohl der Bolzen und/oder ein Freigabemechanismus zur Freigabe betätigt worden ist. Ein solches Hängenbleiben kann ohne die Schräge beispielsweise durch Kaltverschweißung und/oder Formänderungen von Bolzen und/oder Gegenlager während hoher mechanischer Belastungen, z.B. während eines Raketenstarts, begründet sein. Die Schräge bewirkt also, dass der Bolzen mit besonders hoher Sicherheit in die Freigabestellung verschoben werden kann. Die Schräge ist insbesondere in Bezug auf eine Hauptachse des Bolzens schräg. Die Schräge kann z.B. im Wesentlichen eben sein oder auch eine andere, z.B. geschwungene, Form aufweisen.

Der Sicherheitsvorteil der Schräge wird weiter verstärkt, wenn das Gegenlager ein Kugellager ist. In diesem Fall kann die Schräge auch bei großen Belastungen sanft an dem Kugellager abrollen, so dass Formänderungen und Kaltverschweißungen noch wirksamer vermieden werden. Ein Kugellager kann aber auch bei einem anders ausgeformten, beispielsweise zylindrischen, Bolzen vorgesehn.

Bei einer weiteren Ausführungsform sind in einer Sperrstellung der Bolzen und das Gegenlager in einer Auswurfrichtung gegeneinander vorgespannt. Dadurch übt das Gegenlager in der Sperrstellung über die Schräge auf den Bolzen eine Kraft in Richtung seiner Freigabestellung aus. Die Freigabe des Deckels wird somit noch sicherer gewährleistet. Insbesondere ist die Vorspannung derart stark dimensioniert, dass die Kraft auf den Bolzen groß genug ist, um den Bolzen, und insbesondere auch einen zweiten Bolzen, allein, also z.B. bei Ausfall einer dem Bolzen zugeordneten Feder, in die Freigabestellung zu versetzen. Auch diese Ausführungsform dient dazu, insbesondere in Verbindung mit weiteren Redundanzmaßnahmen, eine Freigabe des Deckels zum gewünschten Zeitpunkt in jedem Fall sicherzustellen.

Gemäß einer vorteilhaften Weiterbildung sind zwei Bolzen und zwei Kipphebel des Freigabemechanismus symmetrisch in Bezug auf einen Schieber des Freigabemechanismus angeordnet. Hierdurch lässt sich sicherstellen, dass die Bolzen zum gewünschten Zeitpunkt im Wesentlichen simultan in die Freigabestellung versetzt werden.

Alternativ oder zusätzlich ist ein Magnethalter vorgesehen, mit dem der Freigabemechanismus magnetisch in einer gesicherten Stellung gehalten wird. Dabei kann insbesondere ein Magnetfeld des Magnethalters zum Versetzen des Freigabemechanismus in eine Freigabestellung veränderbar sein. Hierdurch kann der Freigabemechanismus in der Sperrstellung ohne Energieeintrag gehalten werden und es ist nur ein relativ geringer Energieeintrag notwendig, um den Freigabemechanismus in die Freigabestellung zu versetzen. Der Magnethalter kann insbesondere an einem Hebelarm eines Kipphebels angreifen.

Bei einer weiteren Ausführungsform der Erfindung definiert die Auswurfeinheit eine Auswurfrichtung und die Rückhalteeinrichtung umfasst eine Fixiervorrichtung, die zum Fixieren des Satelliten quer zur Auswurfrichtung an den Satelliten angreift, wobei die Fixiervorrichtung zumindest ein bewegbares Fixierelement aufweist, welches, insbesondere im Wesentlichen ausschließlich, translatorisch zwischen einer Fixierstellung und einer Freigabestellung bewegbar ist.

Durch die Fixiervorrichtung lässt sich der Satellit, insbesondere in zumindest einer Richtung quer zur Auswurfrichtung, wirksam festlegen. Die translatorische Bewegung des Fixierelements bewirkt eine besonders definierte Bewegung des Fixierelements zwischen der Fixierstellung und der Freigabestellung. Der Satellit lässt sich somit präzise zu einem gewünschten Zeitpunkt durch die Fixiervorrichtung freigeben. Eine Fixierung des Satelliten in Auswurfrichtung kann beispielsweise durch einen Deckel der Auswurfeinheit oder durch ein an dem Deckel angeordnetes, vorgespanntes Element bewirkt werden. Alternativ oder zusätzlich kann die Fixierung durch das Fixierelement auch eine Fixierung in Auswurfrichtung, z.B. durch Form- und/oder Reibschluss, bewirken. Das Fixierelement kann insbesondere quer zur Auswurfrichtung bewegbar sein und/oder gegen eine Außenwand des Satelliten zur Fixierung desselben verschiebbar sein. Die Fixiervorrichtung ist beispielsweise länglich ausgebildet und/oder erstreckt sich im Wesentlichen parallel zur Auswurfrichtung, was eine kompakte Bauweise der Auswurfeinheit ermöglicht.

Bei einer Weiterbildung ist zumindest ein Paar von Fixierelementen vorgesehen, die in einer Ebene wirksam sind, welche quer zur Auswurfrichtung verläuft. Hierdurch lässt sich der Satellit noch wirksamer festlegen. Insbesondere wirken die Fixierelemente des zumindest einen Paares im Wesentlichen senkrecht zueinander und/oder an einer Ecke des Satelliten.

Zur noch sichereren Festlegung kann alternativ oder zusätzlich eine Mehrzahl von Fixierelementen oder Paaren von Fixierelementen vorgesehen sein, die entlang der Auswurfrichtung verteilt angeordnet sind. Hierdurch wird der Satellit wirksam gegen ein Verkippen geschützt und insbesondere über im Wesentlichen seine gesamte Länge festgelegt.

Insbesondere zum Ausgleich von Fertigungstoleranzen kann ein Federelement vorgesehen sein, welches das oder jedes Fixierelement in der Fixierstellung gegen den Satelliten spannt.

Bei einer weiteren Ausführungsform kann die Fixiervorrichtung eine Kulissenführung für das Fixierelement aufweisen, durch die das Fixierelement zwischen der Fixierstellung und der Freigabestellung bewegbar ist. Hierdurch wird eine besonders kompakte Bauweise des Fixierelements und damit der Auswurfeinrichtung ermöglicht. Insbesondere ist die Kulissenführung dazu ausgebildet, eine translatorische Bewegung eines Elements der Fixiervorrichtung parallel zur Auswurfrichtung in eine translatorische Bewegung des Fixierelements quer zur Auswurfrichtung zu bewirken, insbesondere wobei das Element einteilig eine Mehrzahl von separaten Fixierelementen über jeweilige Kulissenführungen verschiebt.

Das Fixierelement kann beispielsweise in einer Schiene für den Satelliten und/oder für einen Satellitenschlitten verschiebbar gelagert sein. Eine Schiene für den Satelliten und/oder für einen Satellitenschlitten ist in einer Auswurfeinheit üblicherweise ohnehin vorgesehen, um den Satelliten in einer definierten Richtung ohne Rotation auswerfen zu können. Eine Führung für das Fixierelement lässt sich somit vorteilhafterweise in die Schiene, insbesondere in eine von vier Schienen eines Satellitenschachtes, integrieren, so dass wiederum eine besonders kompakte Bauweise ermöglicht wird.

Weiter kann es vorgesehen sein, dass die Fixiervorrichtung derart an einen Deckel der Auswurfeinheit gekoppelt ist, dass ein Öffnen des Deckels ein Versetzen des oder jedes Fixierelements in die Freigabestellung bewirkt. Somit kann ohne zusätzliche Aktorik sichergestellt werden, dass die Freigabe des Satelliten bei einem bestimmten Öffnungswinkel des Deckels erfolgt. Beispielsweise beträgt dieser bestimmte Öffnungswinkel etwa 90°.

Die Fixiervorrichtung umfasst bei einer Weiterbildung zumindest zwei Elemente, die zum Fixieren und/oder Freigeben des Satelliten relativ zueinander entlang der Auswurfrichtung verschiebbar sind. Auch diese Weiterbildung ermöglicht eine besonders kompakte Bauweise. Die Verschiebung lässt sich beispielsweise parallel zur Auswurfrichtung ausführen. Insbesondere ist eines der Elemente das Fixierelement. Alternativ oder zusätzlich kann eines der Elemente beispielsweise einen Führungsvorsprung und/oder einen Führungsbolzen, insbesondere zum Eingriff mit einer Führung eines anderen der Elemente, aufweisen.

Alternativ oder zusätzlich kann eines der Elemente als Hohlprofil ausgebildet sein und eine Steuerstange zum Steuern der Verschiebung des Elements relativ zu dem anderen Element vorgesehen sein, die durch das Hohlprofil verläuft.

Gemäß einer weiteren Ausführungsform der Erfindung sind eine mit einem Hebel sperrbare Auswurffeder und ein Riegel zum Verriegeln des Hebels in einer Sperrstellung vorgesehen. Dabei ist der Riegel schwimmend gelagert mit einem Deckel der Auswurfeinheit gekoppelt. Diese Ausführungsform hat den Vorteil, dass ein Verschließen des Deckels, beispielsweise aus Versehen, nicht zu einer Beschädigung des Hebels führt, wenn sich der Hebel nicht in einer Verriegelungsstellung, sondern in einer anderen, undefinierten Stellung befindet, welche eine Kollision des Riegels mit dem Hebel beim Schließen des Deckels zur Folge hätte.

Insbesondere kann der Riegel über eine Feder mit dem Deckel gekoppelt sein, was eine besonders einfache Variante der schwimmenden Lagerung darstellt. Der Riegel kann somit bei einer Kollision mit dem Hebel einfach einfedern, ohne dass der Hebel oder andere Teile der Auswurfeinheit beschädigt werden.

Weiterer unabhängiger, aber mit den vorstehend beschriebenen Gegenständen kombinierbarer Gegenstand der Erfindung ist eine Auswurfeinheit für zumindest einen Satelliten, insbesondere Picosatelliten, mit einem Rahmen, der einen Innenraum zur Aufnahme des Satelliten und eine Öffnung zu dem Innenraum definiert, einer mittels eines Befestigungselements lösbar an dem Rahmen befestigten Abdeckung für die Öffnung und einer Verliersicherung für das Befestigungselement.

Beispielsweise kurz vor dem Start einer den Satelliten transportierenden Rakete kann es notwendig sein, die Abdeckung von dem Rahmen zu lösen, beispielsweise um durch die Öffnung hindurch eine Elektronik des Satelliten einzuschalten. Durch die Verliersicherung wird verhindert, dass dabei das Befestigungselement verloren geht und insbesondere in einen unzugänglichen Bereich der Rakete fällt, was zur Folge hätte, dass vor dem Start das Befestigungselement gesucht und entfernt werden müsste.

Die Verliersicherung kann beispielsweise als eine rückstellfähige Lasche ausgebildet sein, welche insbesondere an der Abdeckung befestigt ist. Die Verliersicherung kann das Befestigungselement auf die Abdeckung zu vorspannen. Das Befestigungselement kann als Schraube ausgebildet sein. Insbesondere kann die Schraube einen Schraubenkopf umfassen, der einen in Bezug auf eine Schraubenachse radial abstehenden, insbesondere umlaufenden, Vorsprung aufweist, über den die Verliersicherung das Befestigungselement vorspannt.

Weitere Ausführungsformen der Erfindung sind den Ansprüchen, der Beschreibung und den Zeichnungen zu entnehmen.

Die Erfindung wird nachfolgend lediglich beispielhaft anhand von schematischen Zeichnungen erläutert.
- Fig. 1: zeigt eine erfindungsgemäße Auswurfeinheit in perspektivischer Ansicht.
- Fig. 2: zeigt in einer Draufsicht einen Deckel der Auswurfeinheit mit einem Freigabemechanismus in einer Freigabestellung.
- Fig. 3: zeigt eine Schnittansicht des Deckels.
- Fig. 4: zeigt eine weitere Draufsicht des Deckels, wobei sich der Freigabemechanismus in einer Sperrstellung befindet.
- Fig. 5: zeigt einen Bolzen des Deckels in einer Schnittansicht.
- Fig. 6: zeigt eine alternative Ausführungsform eines Deckels einer erfindungsgemäßen Auswurfeinheit.
- Fig. 7: zeigt eine Fixiervorrichtung der Auswurfeinheit der Fig. 1 in perspektivischer Ansicht.
- Fig. 8: zeigt die Fixiervorrichtung in einer Seitenansicht.
- Fig. 9: zeigt die Fixiervorrichtung in einer weiteren Seitenansicht.
- Fig. 10: zeigt die Fixiervorrichtung und eine Schiene für einen Satelliten in perspektivischer Ansicht.
- Fig. 11: zeigt die Fixiervorrichtung und die Schiene in einer weiteren perspektivischen Ansicht.
- Fig. 12: zeigt ein Fixierelement der Fixiervorrichtung in einer perspektivischen Schnittansicht.
- Fig. 13: zeigt einen Sicherungsmechanismus für einen Satellitenschlitten der Auswurfeinheit von Fig. 1 in einer perspektivischen Ansicht.
- Fig. 14: zeigt eine Abdeckung der Auswurfeinheit der Fig. 1.
- Fig. 15: zeigt eine Seitenansicht der Abdeckung.

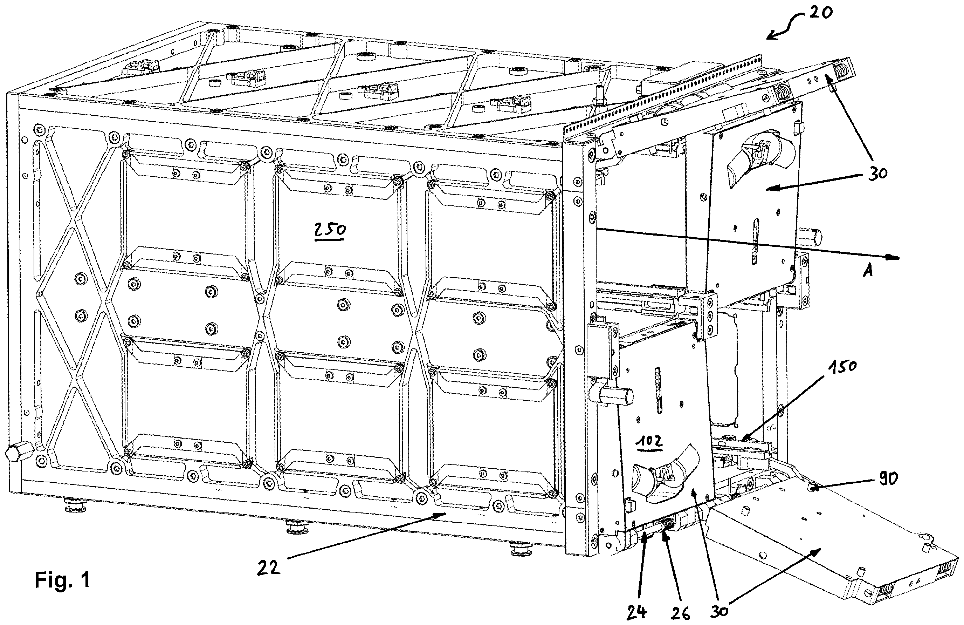

Die in Fig. 1 gezeigte Auswurfeinheit 20 umfasst einen Rahmen 22, welcher einen Innenraum zur Aufnahme mehrerer, nicht dargestellter Satelliten definiert. Der Innenraum umfasst vier Satellitenschächte, welche jeweils durch einen Deckel 30 verschließbar sind. Jeder Deckel 30 sichert in einer Geschlossenstellung einen Satelliten gegenüber einer Bewegung in einer Auswurfrichtung A. In jedem Satellitenschacht ist außerdem eine Fixiervorrichtung 150 angeordnet, welche den Satelliten quer zur Auswurfrichtung A sichert.

Der Rahmen 22 umfasst für jeden Satellitenschacht eine Mehrzahl an Öffnungen, welche jeweils durch eine Abdeckung 250 verschlossen sind. Durch die Öffnungen kann ein Techniker zu dem jeweiligen Satelliten gelangen, ohne diesen aus der Auswurfeinheit 20 entfernen zu müssen.

Jeder Deckel 30 ist einseitig um eine Deckelachse 24 drehbar gelagert und durch eine Deckelfeder 26, welche als Torsionsfeder ausgebildet ist, in eine Offenstellung vorgespannt. Der Deckel 30 umfasst eine Mehrzahl an Dämpfungsstiften 90, welche in der Geschlossenstellung an dem jeweiligen Satelliten anliegen und diesen in Auswurfrichtung A sichern.

Jeder Deckel 30 ist während des Transports der Satelliten zu einem erwünschten Auswurfort in seiner Geschlossenstellung gesperrt und wird am Auswurfort freigegeben, woraufhin der Deckel infolge der Vorspannung durch die Deckelfeder 26 in seine Offenstellung versetzt wird, so dass der jeweilige Satellit ausgeworfen werden kann.

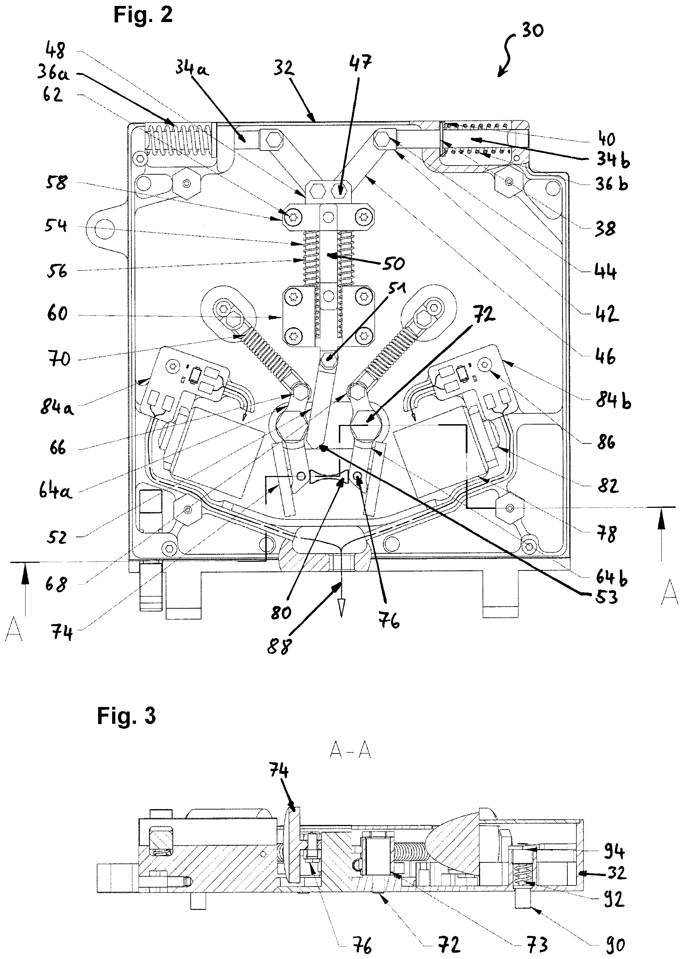

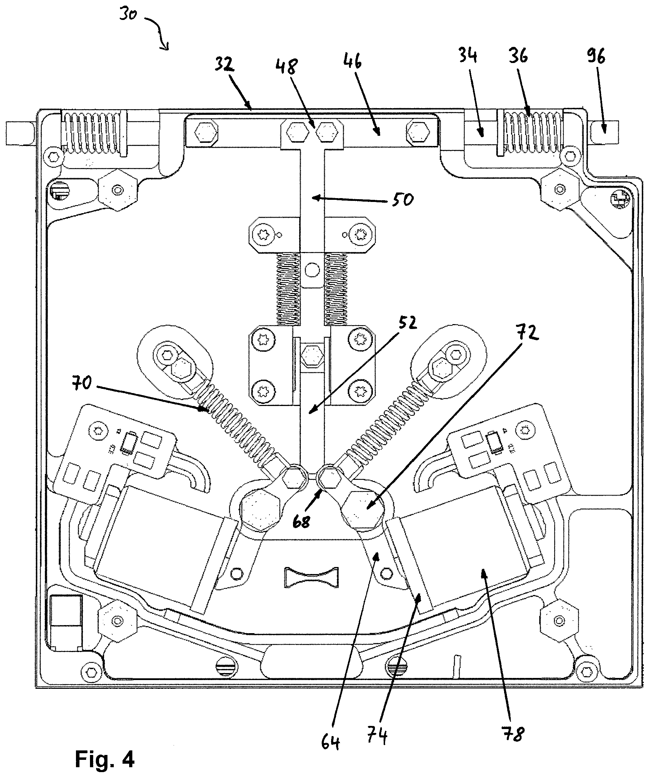

In den Fig. 2 und 4 ist ein und derselbe Deckel 30 jeweils ohne eine in Fig. 1 sichtbare Abdeckung 102 gezeigt, so dass ein Freigabemechanismus des Deckels 30 sichtbar ist. In Fig. 2 befindet sich der Freigabemechanismus in einer Freigabestellung, in welcher sich der Deckel 30 in seine Offenstellung bewegen kann. Fig. 4 zeigt den Freigabemechanismus in einer Sperrstellung, in der der Deckel 30 in seiner Geschlossenstellung gesperrt ist.

Der Deckel 30 umfasst zwei Bolzen 34, welche, wie in Fig. 4 sichtbar, zum Sperren des Deckels 30 aus einem Deckelrahmen 32 des Deckels 30 in entgegengesetzten Richtungen herausragen und mit dem Rahmen 22 in Eingriff stehen. Jeder Bolzen 34 ist durch eine Bolzenfeder 36 über einen Sicherungsring 38 und eine Scheibe 40 in eine Freigabestellung vorgespannt, nämlich in Richtung eines Deckelinneren. Die Bolzenfeder 36 stützt sich dafür am Deckelrahmen 32 ab.

Jeder Bolzen 34 weist einen Bolzenkopf 42 auf, welcher einem sperrenden Bolzenende gegenüberliegt und über einen Gelenkzapfen 44 ein Drehgelenk mit einem Schenkel 46 bildet. Der Schenkel 46 ist mit einem Knieelement 48 eines Schiebers 50 ebenfalls um einen Gelenkzapfen 47 drehbar verbunden. Der Schenkel 46 und das Knieelement 48 bilden ein Kniegelenk für den jeweiligen Bolzen 34.

Der Schieber 59 ist durch ein erstes Schieberlager 58 und ein zweites Schieberlager 60 in einer Richtung senkrecht zu den Bolzen 34, in Fig. 2 vertikal, verschiebbar gelagert. Die Schieberlager 58, 60 sind über Schrauben 62 an dem Deckelrahmen 32 festgelegt. Der Schieber 50 ist durch zwei Schieberfedern 54 in Richtung einer Freigabestellung vorgespannt. Die Schieberfedern 54 sind jeweils auf einem Federführungsstift 56 geführt.

Der Schieber 50 umfasst einen Schwenkarm 52, welcher mit einem Körper des Schiebers 50 über einen Gelenkzapfen 51 drehbar verbunden ist. Der Schwenkarm 52 umfasst an einem dem Gelenkzapfen 51 gegenüberliegenden Ende zwei Schrägen 53, an denen der Schwenkarm 52 und damit der Schieber 50 in einer Sperrstellung abgestützt wird.

Der Freigabemechanismus umfasst außerdem zwei Kipphebel 64, die jeweils durch einen Hebellagerzapfen 72 drehbar gelagert sind. Jeder Hebel 64 weist einen ersten Hebelarm auf, an dessen Ende ein Kugellager 68 zum Eingriff mit einer der Schrägen 53 des Schwenkarms 52 in der Sperrstellung vorgesehen ist. Das Kugellager 68 ist über einen Zapfen 66 mit dem ersten Hebelarm verbunden. An dem ersten Hebelarm ist außerdem eine Hebelfeder 70 wirksam, welche den Kipphebel 64 in eine Freigabestellung vorspannt. Ein zweiter, dem ersten gegenüberliegender Hebelarm des Kipphebels 64 umfasst einen Drehzapfen 76, über den eine Magnetplatte 74 drehbar mit dem zweiten Hebelarm des Kipphebels 64 verbunden ist. Die Magnetplatte 74 weist nicht notwendigerweise ein eigenes permanentes Magnetfeld auf, sondern ist magnetisch mit einer Kraft beaufschlagbar.

Zum Anziehen der Magnetplatte 74 und damit zum Halten des Kipphebels 64 gegen eine Vorspannkraft der Hebelfeder 70 in die Sperrstellung ist ein Elektropermanentmagnet 78 vorgesehen, der über eine Schraube 82 an dem Deckelrahmen 32 festgelegt ist. Der Elektropermanentmagnet 78 weist ein Permanentmagnetfeld auf, welches zum Freigeben des Deckels 30 elektrisch veränderbar ist. Zum Verändern des Magnetfelds ist eine Platine 84 vorgesehen, welche mit einer Schraube 86 ebenfalls an dem Deckelrahmen 32 festgelegt ist. Eine Kabelführung 88 von der Platine 84 zu einer nicht dargestellten Steuerungseinheit ist durch einen Pfeil angedeutet.

Im Folgenden wird die Funktion des Freigabemechanismus des Deckels 30 näher beschrieben. Fig. 4 zeigt den Freigabemechanismus in seiner Sperrstellung und Fig. 2 zeigt den Freigabemechanismus in seiner Freigabestellung.

Wenn, ausgehend von der Sperrstellung gemäß Fig. 4, von der Steuerungseinrichtung ein Freigabebefehl an die Platinen 84 abgegeben wird, generiert eine jeweilige Platine 84 einen elektrischen Impuls, welcher das Permanentmagnetfeld des zugeordneten Elektropermanentmagneten 78 kurzzeitig schwächt. Das Permanentmagnetfeld wird dabei zumindest so stark geschwächt, dass die zugeordnete Hebelfeder 70 den zugeordneten Kipphebel 64 in seine Freigabestellung versetzt und dabei die Magnetplatte 74 von dem Elektropermanentmagneten 78 löst.

Der Freigabebefehl der Steuerungseinrichtung wird an beide Platinen 84 simultan ausgesendet. Beide Kipphebel 64 werden also im Wesentlichen gleichzeitig in die Freigabestellung versetzt. In der Freigabestellung stehen die zweiten Hebelarme mit einem Anschlag 80 in Eingriff.

In der Sperrstellung stützen beide Kipphebel 64 den Schwenkarm 52 und damit den Schieber 50. Wenn nun die Kipphebel 64 in die Freigabestellung versetzt werden, werden der Schwenkarm 52 und damit der Schieber 50 nicht länger in dieser Sperrstellung gestützt, sondern in die Freigabestellung entlassen, nämlich in den Fig. 2 und 4 vertikal nach unten.

Die Kipphebel 64 sind jeweils mit ihrer zugeordneten Hebelfeder 70 und dem zugeordneten Elektropermanentmagneten 78 symmetrisch in Bezug auf eine Verschiebungsachse des Schiebers 50 angeordnet. Falls einer der Kipphebel 64 auf den Freigabebefehl der Steuerungseinrichtung hin nicht in seine Freigabestellung versetzt wird, beispielsweise weil die zugeordnete Platine 84 defekt ist, wird der Schieber 50 dennoch in die Freigabestellung verschoben. Denn in diesem Fall gleitet der Schwenkarm 52 an dem Kugellager 68 des in der Sperrstellung verbliebenen Kipphebels 64 ab und wird gegenüber dem Schieberkörper verschwenkt, so dass der Schieber 50 in seine Freigabestellung gleiten kann. Die symmetrisch angeordneten Kipphebel 64 bilden also insbesondere in Verbindung mit dem Schwenkarm 52 einen redundanten Mechanismus zum Entlassen des Schiebers 50 in seine Freigabestellung. Dieser Mechanismus gewährleistet auch dann eine Freigabe, wenn einer der Kipphebel 64 fehlerhaft in seiner Sperrstellung verbleibt.

In der Sperrstellung von Fig. 4 wird der Schwenkarm 52 an seinen endseitigen Schrägen 53 derart an den jeweiligen ersten Hebelarmen der Kipphebel 64 abgestützt, dass von dem Schieber 50 bzw. dem Schwenkarm 52 auf die Kipphebel 64 ausgeübte Kräfte durch eine jeweilige Drehachse der Kipphebel 64, welche durch den Hebellagerzapfen 72 definiert wird, verlaufen. Hierdurch ist sichergestellt, dass diese Kräfte vollständig durch den Hebellagerzapfen 72 aufgenommen werden und nicht in einem Moment auf den Kipphebel 64 um den Hebellagerzapfen 72 resultieren. Dies stellt sicher, dass sich die Magnetplatte 74 auch unter hohen Belastungen der Auswurfeinheit 20 nicht von dem Elektropermanentmagneten 78 unerwünscht löst.

In der Sperrstellung ist das Knieelement 48 im Wesentlichen genau zwischen den Bolzen 34 positioniert und die Schenkel 46 sind dabei parallel zu den Bolzen 34 ausgerichtet. In dieser Stellung wirken die Federkräfte der Bolzenfedern 36 in entgegengesetzten Richtungen und gleichen sich in dem Knieelement 48 aus. In der Sperrstellung üben die Bolzenfedern 36 also im Wesentlichen keine Kraft auf den Schieber 50 in Richtung seiner Verschiebungsachse aus. Diese Anordnung minimiert auf den Schieber 50 ausgeübte Kräfte auch unter hohen Belastungen, insbesondere während des Transports des Satelliten in einer Rakete. Auch diese Anordnung trägt dazu bei, dass sich der Freigabemechanismus nicht zu einem unerwünschten Zeitpunkt in die Freigabestellung versetzt und somit den Deckel unerwünscht frei gibt.

Sobald zumindest einer der Kipphebel 64 in seine Freigabestellung verschwenkt, wird also der Schieber 50 durch die Schieberfeder 54 aus seiner Sperrstellung heraus in Richtung seiner Freigabestellung, in Fig. 4 vertikal nach unten, verschoben. Die Schieberfeder 54 ist, insbesondere im Vergleich zu den Bolzenfedern 36, relativ schwach dimensioniert und dient im Wesentlichen nur dazu, das Knieelement 48 minimal auszulenken, so dass die Federkräfte der Bolzenfedern 36 sich nicht länger gegenseitig ausgleichen, sondern über die Schenkel 46 den Schieber 50 in die, in Fig. 2 gezeigte, Freigabestellung verschieben. Dabei werden die Bolzen 34 in Richtung des Deckelinneren verschoben, also in ihre Freigabestellung versetzt.

Jede Bolzenfeder 36 ist dabei derart stark dimensioniert, dass ihre Federkraft ausreicht, um alleine den Schieber 50 in seine Freigabestellung zu verschieben und gleichzeitig den jeweils anderen Bolzen 34 über das Gestänge in seine Freigabestellung zu ziehen. Wenn also beispielsweise die Bolzenfeder 36a des einen Bolzens 34a ausfällt, weil sie beispielsweise gebrochen ist, werden trotzdem der Schieber 50 und der Bolzen 34a sowie der Bolzen 34b von der Bolzenfeder 36b des anderen Bolzens 34b in die Freigabestellung verschoben. Es ist also sichergestellt, dass auch im einfachen Fehlerfall, also wenn eine der Bolzenfedern 36 ausfällt, der Deckel 30 zuverlässig freigegeben wird.

In Fig. 3 ist eine Schnittansicht des Deckels entlang einer in Fig. 2 angedeuteten Schnittlinie A-A dargestellt. Ein zum Halten des Satelliten in Auswurfrichtung vorgesehener Dämpfungsstift 90 ist durch eine Dämpfungsstiftfeder 92 in der Geschlossenstellung des Deckels 30 gegen den Satelliten vorgespannt. Die Dämpfungsstiftfeder 92 ist dabei an einer Spannschraube 94 abgestützt, welche mit dem Deckelrahmen 32 fest verbunden ist.

In Fig. 3 ist außerdem einer der Hebellagerzapfen 72 sichtbar, welcher den entsprechenden Kipphebel 64 über eine Hebellagerhülse 73 drehbar lagert. Des Weiteren ist einer der Drehzapfen 76 sichtbar, welcher die zugeordnete Magnetplatte 74 drehbar in Bezug auf den entsprechenden Kipphebel 64 lagert.

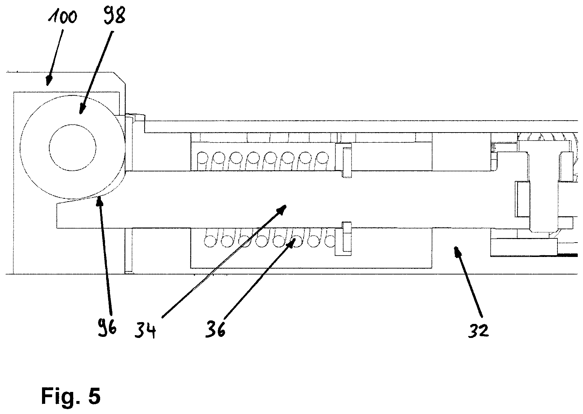

Fig. 5 zeigt eine Schnittansicht eines Eckbereichs des Deckels 30 in der Sperrstellung. Der Bolzen 34 ragt dabei seitlich aus dem Deckelrahmen 32 heraus und steht mit einem an dem Rahmen 22 befestigten Gegenlagerelement 100 zum Sperren des Deckels 30 in der Geschlossenstellung in Eingriff. Die Bolzenfeder 36 spannt dabei den Bolzen 34 in die Freigabestellung vor. Der Bolzen 34 weist an seinem aus dem Deckelrahmen 32 herausragenden Ende eine Schräge 96 auf, die an einem Kugellager 98 anliegt, welches an dem Gegenlagerelement 100 befestigt ist. Die Schräge 96 weist eine geschwungene Kontur auf. Durch die Schräge 96 und durch das Kugellager 98 lässt sich der Bolzen 34 besonders leichtgängig ins Innere des Deckels 30, also in seine Freigabestellung, einziehen. Dabei kann die Schräge 96 an einem Außenring des Kugellagers 98 abgleiten, ohne dass der Bolzen 34 blockiert wird. Insbesondere dadurch dass der Außenring des Kugellagers 98 gegenüber dem Gegenlagerelement 100 verdrehbar ist, werden Kaltverschweißungen zwischen dem Bolzen 34 und dem Gegenlagerelement 100 auch bei hohen Belastungen vermieden. Ein zuverlässiges Einziehen des Bolzens 34 wird also mit besonders hoher Sicherheit gewährleistet.

Die Dämpfungsstiftfedern 92, von denen eine in Fig. 3 gezeigt ist, und die Deckelfeder 26 sind jeweils für sich und zumindest zusammen ausreichend stark dimensioniert, dass der Bolzen 34 in der Geschlossenstellung des Deckels mit der Schräge 96 derart stark gegen das Kugellager 98 vorgespannt ist, dass beide Bolzen 34 selbst dann über die jeweiligen Schrägen 96 nach innen, also in ihre Freigabestellung, verschoben werden, wenn beide Bolzenfedern 36 ausfallen. Hierdurch ist ein weiterer Redundanzfaktor geschaffen, der mit besonders hoher Zuverlässigkeit sicherstellt, dass die Bolzen 34 zum gewünschten Zeitpunkt in die Freigabestellung verschoben werden und den Deckel 30 zum Auswerfen des Satelliten freigeben.

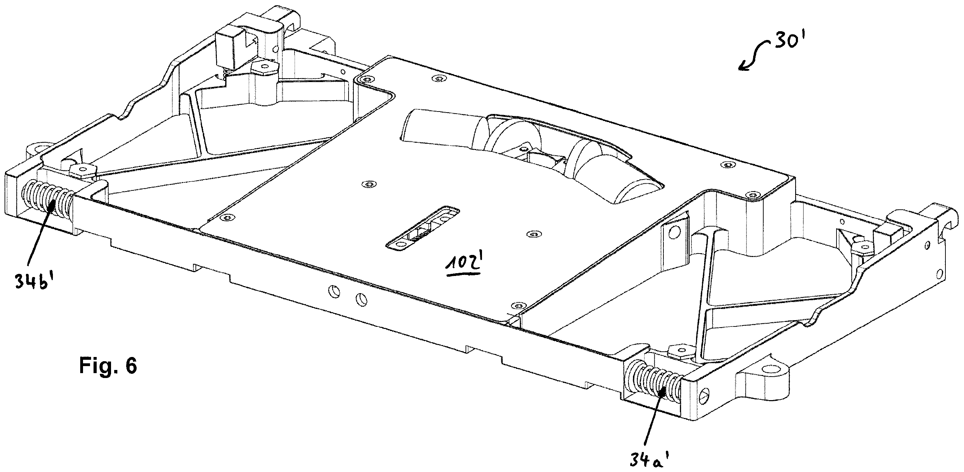

Fig. 6 zeigt eine alternative Ausführungsform eines Deckels 30', der bei der Auswurfeinheit 20 der Fig. 1 zwei der vier Satellitenschächte abdeckt. Alternativ ließen sich beispielsweise auch zwei der benachbarten Satellitenschächte zu einem breiteren Satellitenschacht für einen breiteren Satelliten verbinden und durch den Deckel 30' verschließen. Der Deckel 30' weist ebenso wie der Deckel 30 der Fig. 1 bis 5 einen Freigabemechanismus zum Versetzen von zwei Bolzen 34a' und 34b' in eine Freigabestellung auf. Der Freigabemechanismus ist jedoch in Fig. 6 durch eine Deckelabdeckung 102 verdeckt. Der Deckel 30' entspricht also im Wesentlichen dem Deckel 30 der Fig. 1 bis 4, ist jedoch breiter ausgeführt.

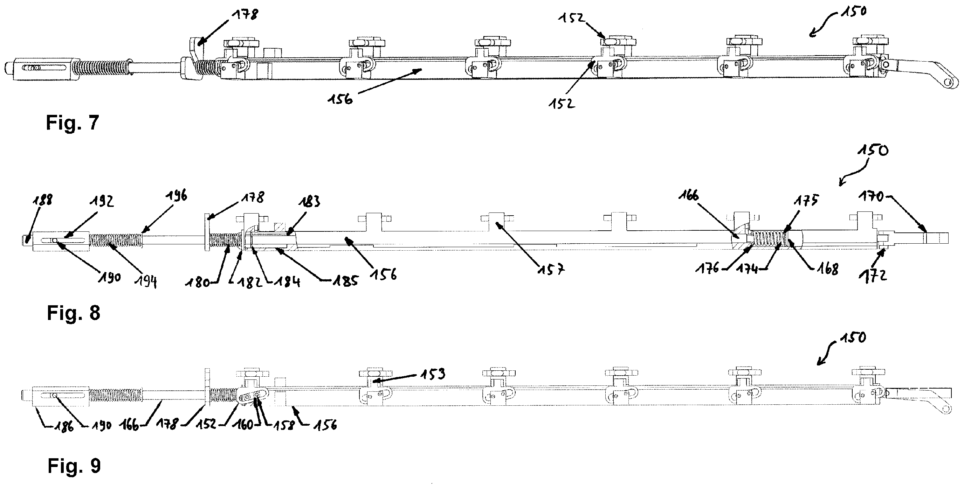

In den Fig. 7 bis 9 ist die Fixiervorrichtung 150 der Auswurfeinheit 20 der Fig. 1 in perspektivischer Ansicht bzw. in Seitenansichten gezeigt. Die Fixiervorrichtung 150 umfasst mehrere, jeweils in einer gemeinsamen Ebene wirkende Paare von Fixierelementen 152, welche jeweils translatorisch quer zur Auswurfrichtung A verschiebbar sind, um den Satelliten festzulegen bzw. freizugeben. Die Fixiervorrichtung 150 umfasst außerdem ein Hohlprofil 156 und eine Steuerstange 166, welche sich durch das Hohlprofil 156 hindurch erstreckt und relativ zu diesem entlang der Auswurfrichtung A verschiebbar ist. Die Steuerstange 166 ist über einen Gelenkzapfen 172 mit einem Koppelglied 170 um den Gelenkzapfen 172 drehbar gekoppelt. Das Koppelglied 170 ist wie in Fig. 1 gezeigt an einem dem Gelenkzapfen 172 gegenüberliegenden Ende mit dem zugeordneten Deckel 30 derart gekoppelt, dass ein Öffnen des Deckels 30 die Steuerstange 166 entlang der Auswurfrichtung A, in den Fig. 7 bis 9 nach rechts, in Richtung einer Freigabestellung verschiebt. Die Steuerstange 166 ist in einem deckelseitigen Endbereich durch eine Hülse 168 geführt.

Es ist ein Stützelement 178 vorgesehen, welches an dem Rahmen 22 festgelegt ist und die Steuerstange 166 verschiebbar führt. An dem Stützelement 178 stützt sich eine Feder 180 ab, die über eine Scheibe 182 das Hohlprofil 156 in Auswurfrichtung A vorspannt. In der Geschlossenstellung des Deckels spannt außerdem eine Feder 174 das Hohlprofil 156 über einen Sicherungsring 175 gegen die Steuerstange 166 und entgegen der Auswurfrichtung A vor. Zwischen dem Hohlprofil 156 und der Feder 174 ist eine Scheibe 175 angeordnet, die in einer Ausnehmung der Steuerstange 166 verschiebbar gelagert ist, wobei die Ausnehmung in axialer Richtung, also entlang der Auswurfrichtung A, lang genug ist, damit die Feder 174 Fertigungstoleranzen, beispielsweise minimale Größenunterschiede von Satelliten, ausgleichen kann.

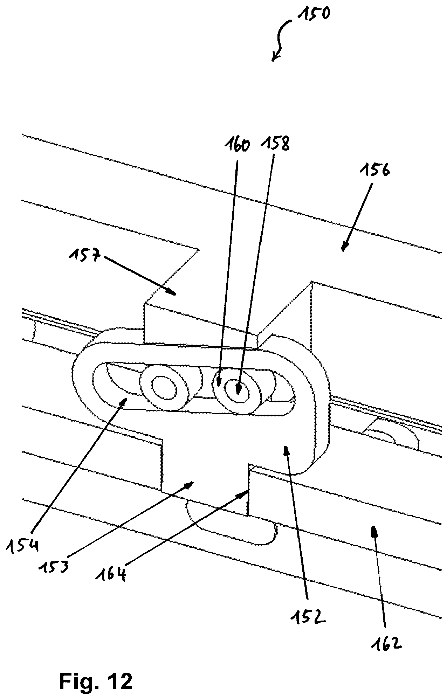

Wird nun die Steuerstange 166 durch ein Öffnen des Deckels in Auswurfrichtung A verschoben, entspannt sich zunächst die Feder 174 und nach einem kurzen Öffnungsweg gerät die Scheibe 176 in Eingriff mit einem auswurffederseitigen Anschlag der Ausnehmung der Steuerstange 166. Daraufhin verschiebt die Feder 180 das Hohlprofil 156 über die Scheibe 182 in Auswurfrichtung A. Das Verschieben des Hohlprofils 156 bewirkt eine Bewegung der Fixierelemente 152 heraus aus einer Fixierstellung in eine Freigabestellung, was unten insbesondere anhand von Fig. 12 näher erläutert wird.

An der Steuerstange 166 ist des Weiteren ein Sicherungsring 184 befestigt und das Hohlprofil 156 weist eine zu dem Sicherungsring 184 korrespondierende Ausnehmung 185 mit einem deckelseitigen Anschlag 183 auf. Wenn beim Verschieben der Steuerstange 166 in Auswurfrichtung A der Sicherungsring 184 mit dem Anschlag 183 in Eingriff gelangt, wird das Hohlprofil 156 mit der Steuerstange 166 in Auswurfrichtung A verschoben. Somit ist eine Redundanzmaßnahme realisiert, durch die das Hohlprofil 156 auch dann in die Freigabestellung verschoben wird, wenn die Feder 180 ausfällt. Der Satellit wird also mit besonders hoher Zuverlässigkeit am erwünschten Auswurfort freigegeben.

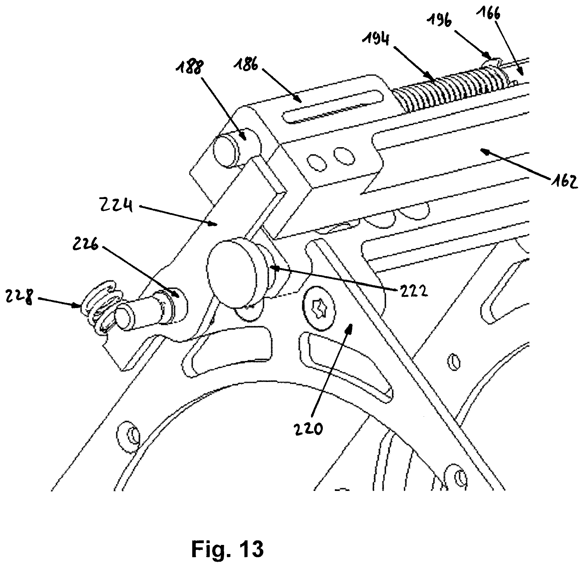

An einem auswurffederseitigen Ende der Steuerstange 166 ist ein Riegel 186 vorgesehen, der gegenüber der Steuerstange 166 schwimmend gelagert ist. Der Riegel 186 ist gegenüber der Steuerstange 166 durch eine Feder 194 entgegen der Auswurfrichtung A vorgespannt, wobei sich die Feder 194 an einem Sicherungsring 196 der Steuerstange 166 abstützt. Der Riegel 186 ist gegenüber der Steuerstange 166 verschiebbar geführt. Die Steuerstange 166 weist einen Führungszapfen 190 auf, der in einer linearen Führung 192 des Riegels 186 geführt ist. Sobald der Führungszapfen 190 an einem deckelseitigen Ende der Führung 192 anschlägt, wird der Riegel 186 zusammen mit der Steuerstange 166 in Auswurfrichtung A verschoben und ein Riegelzapfen 188 wird in eine Freigabestellung versetzt. Dieser Vorgang wird unten anhand von Fig. 13 näher erläutert.

Der Riegel 186 und das Koppelglied 170 können in unterschiedlichen Orientierungen an der Steuerstange 166 angebracht werden. Je nach Einbaulage der Fixiervorrichtung 150 in der Auswurfeinheit 20 kann also beispielsweise der Riegel 186 gemäß Fig. 8 oder gemäß Fig. 9 an der Steuerstange 166 befestigt werden. Verschiedene mögliche Orientierungen des Koppelglieds 170 sind in Fig. 9 angedeutet.

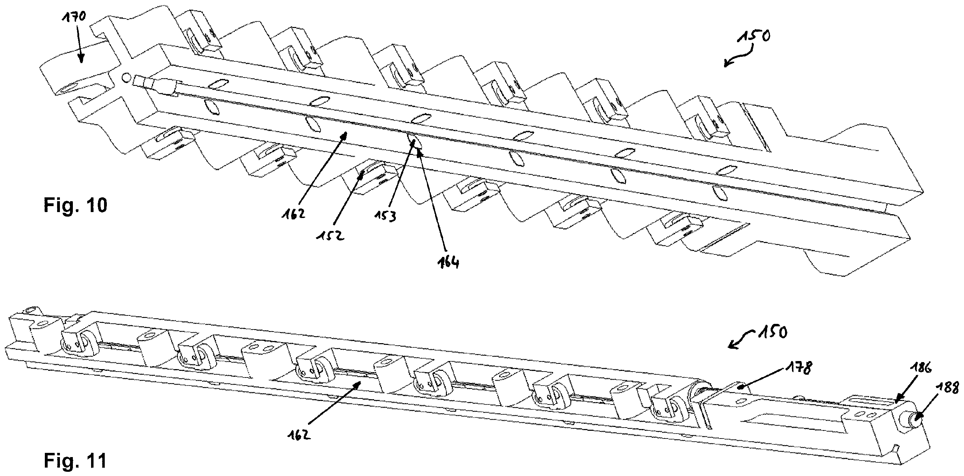

In den Fig. 10 und 11 ist die Fixiervorrichtung 150 zusammen mit einer Schiene 162 für den Satelliten in unterschiedlichen perspektivischen Ansichten gezeigt. Die Schiene 162 weist eine Mehrzahl von Querführungen 164 jeweils für einen Fixiervorsprung 153 eines Fixierelements 152 auf. In Fig. 11 ist außerdem ersichtlich, dass die Schiene 162 eine Führung in Auswurfrichtung A für den Riegel 186 bildet. In den Fig. 10 und 11 sind des Weiteren insbesondere das Koppelglied 170, das Stützelement 178 sowie der Riegel 168 mit dem Riegelzapfen 188 sichtbar.

Fig. 12 zeigt eines der Fixierelemente 152 im Detail in einer Schnittansicht. Das Fixierelement 152 umfasst eine Kulissenführung 154, die mit zwei Führungsrollen 160, welche von jeweiligen Führungszapfen 158 getragen sind, in Eingriff steht. Die Führungszapfen 158 sind an einem Vorsprung 157 des Hohlprofils 156 befestigt. Das Fixierelement 152 umfasst außerdem einen Fixiervorsprung 153 zum Beaufschlagen des Satelliten, wobei der Fixiervorsprung 153 in einer Querführung 164 der Schiene 162 quer zur Auswurfrichtung A geführt ist.

Die Kulissenführung 154 ist als Langloch ausgebildet, welches sich schräg in Bezug auf die Auswurfrichtung A erstreckt. Wenn sich das Hohlprofil 156 relativ zu der Schiene 162, in Fig. 12 nach rechts, verschiebt, wirken die Führungszapfen 158 und die Führungsrolle 160 mit der Kulissenführung 154 derart zusammen, dass das Fixierelement 152 entlang der Querführung 164 gegen den Satelliten, also in Fig. 12 nach unten, verschoben wird. Wird dagegen das Hohlprofil 156 in Auswurfrichtung A, also in Fig. 12 nach links, verschoben, so wird das Fixierelement 152 in eine Freigabestellung versetzt, in Fig. 12 also nach oben verschoben.

In Fig. 13 ist ein Satellitenschlitten 220 gezeigt, der durch eine nicht dargestellte Auswurffeder in der Auswurfrichtung A vorgespannt ist. Der Satellitenschlitten 220 ist durch einen Hebel 224 gesichert, der in eine Sicherungsausnehmung 222 eingreift. Der Hebel 224 ist durch ein Drehlager 226 drehbar gelagert und in Bezug auf das Drehlager 226 gegenüber der Sicherungsausnehmung 222 durch eine Feder 228 in eine entsicherte Stellung vorgespannt. Entgegen der Federkraft dieser Feder 228 hält der Riegelzapfen 188 den Hebel 224 in einer gesicherten Stellung, also in Eingriff mit der Sicherungsausnehmung 222.

Wenn der Riegel 186 in Auswurfrichtung A verschoben wird, gerät der Riegelzapfen 188 außer Eingriff mit dem Hebel 224 und entlässt diesen in die entsicherte Stellung, so dass die Auswurffeder den Satellitenschlitten 220 in Auswurfrichtung A verschieben kann und damit den Satelliten auswirft. Wenn sich der Hebel 224 in der entsicherten Stellung befindet, kann eine Bewegung des Riegels 186 entgegen der Auswurfrichtung A, also in Fig. 13 nach links, zu einer Kollision des Riegelzapfens 188 mit dem Hebel 224 führen. Beispielsweise kann dies durch versehentliches Schließen des Deckels 30 während einer Montage oder Handhabung der Auswurfeinheit 20 verursacht werden. Dadurch, dass der Riegel 186 gegenüber der Steuerstange 166 schwimmend gelagert ist, kann im Kollisionsfall der Riegel 186 einfach gegen die Feder 194 und den Sicherungsring 196 einfedern und eine Beschädigung insbesondere des Hebels 224 wird vermieden.

Die Auswurfeinheit 20 der Fig. 1 ist derart ausgebildet, dass die Fixierelemente 152 bei einem Öffnungswinkel des zugeordneten Deckels 30 von etwa 90° in ihre Freigabestellung versetzt werden, also den Satelliten freigeben. Bei einem Öffnungswinkel von etwa 105° wird der Riegel 186 in seine Freigabestellung versetzt und gibt somit die Auswurffeder zum Auswerfen des Satelliten frei. Diese zeitliche Abfolge ist insbesondere durch die vorstehend beschriebenen Mechanismen realisiert.

Die Auswurfeinheit 20 kann in der dargestellten Konfiguration beispielsweise in einem der vier Satellitenschächte einen Satelliten der Größe 3U gemäß CubeSat-Standard aufnehmen. Alternativ können beispielsweise in einem Satellitenschacht auch ein Satellit der Größe 1U und einer der Größe 2U gemeinsam aufgenommen werden. Es ist auch möglich, benachbarte Schächte zusammenzulegen, also beispielsweise vorgesehene Trennwände zwischen den Schächten zu entfernen, um beispielsweise einen Schacht für einen Satelliten der Größe 6U zu schaffen. Ein solcher Schacht kann insbesondere durch einen Deckel 30' gemäß Fig. 6 verschlossen sein.

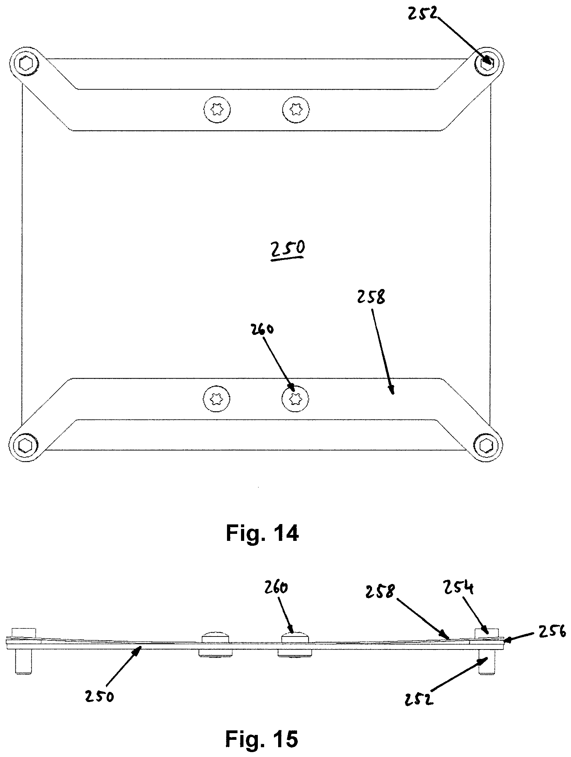

In den Fig. 14 und 15 ist eine Abdeckung 250 der Auswurfeinheit 20 der Fig. 1 in einer Draufsicht bzw. einer Seitenansicht gezeigt. Die Abdeckung wird durch Schrauben 252 an dem Rahmen 22 der Auswurfeinheit 20 befestigt, um eine Öffnung des Rahmens abzudecken. Eine jeweilige Schraube 252 weist einen Schraubenkopf mit einem zylindrischen Abschnitt 254 und einem umlaufenden Vorsprung 256 auf. Eine elastische Lasche 258 umgreift den zylindrischen Abschnitt 254 mit einer korrespondierenden Ausnehmung und spannt die Schraube 252 über den umlaufenden Vorsprung 256 in einer Befestigungsrichtung, in Fig. 15 nach unten, vor. Die Lasche 258 ist durch Schrauben 260 an der Abdeckung 250 befestigt. Die Schraube 252 weist einen Innenantrieb, in dieser Ausführungsform einen Innensechskant, auf.

Zum Lösen der Abdeckung 250 von dem Rahmen 22 können die Schrauben 252 losgeschraubt werden, wobei sie von der Lasche 258 in der Befestigungsrichtung vorgespannt bleiben. Hierdurch wird die jeweilige Schraube 252 auch im gelösten Zustand an der Abdeckung 250 gehalten, so dass die Schraube 252 nicht verloren geht.

### Bezugszeichenliste

- 20: Auswurfeinheit
- 22: Rahmen
- 24: Deckelachse
- 26: Deckelfeder
- 30, 30': Deckel
- 32: Deckelrahmen
- 34 a, b: Bolzen
- 36 a, b: Bolzenfeder
- 38: Sicherungsring
- 40: Scheibe
- 42: Bolzenkopf
- 44: Gelenkzapfen
- 46: Schenkel
- 47: Gelenkzapfen
- 48: Knieelement
- 50: Schieber
- 51: Gelenkzapfen
- 52: Schwenkarm
- 53: Schräge
- 54: Schieberfeder
- 56: Federführungsstift
- 58: erstes Schieberlager
- 60: zweites Schieberlager
- 62: Schraube
- 64 a, b: Kipphebel
- 66: Zapfen
- 68: Kugellager
- 70: Hebelfeder
- 72: Hebellagerzapfen
- 73: Hebellagerhülse
- 74: Magnetplatte
- 76: Drehzapfen
- 78: Magnet
- 80: Anschlag
- 82: Schraube
- 84 a, b: Platine
- 86: Schraube
- 88: Kabelführung
- 90: Dämpfungsstift
- 92: Dämpfungsstiftfeder
- 94: Spannschraube
- 96: Schräge
- 98: Kugellager
- 100: Gegenlagerelement
- 102: Deckelabdeckung
- 150: Fixiervorrichtung
- 152: Fixierelement
- 153: Fixiervorsprung
- 154: Kulissenführung
- 156: Hohlprofil
- 157: Vorsprung
- 158: Führungszapfen
- 160: Führungsrolle
- 162: Schiene
- 164: Querführung
- 166: Steuerstange
- 168: Hülse
- 170: Koppelglied
- 172: Gelenkzapfen
- 174: Feder
- 175: Sicherungsring
- 176: Scheibe
- 178: Stützelement
- 180: Feder
- 182: Scheibe
- 183: Anschlag
- 184: Sicherungsring
- 185: Ausnehmung
- 186: Riegel
- 188: Riegelzapfen
- 190: Führungszapfen
- 192: Führung
- 194: Feder
- 196: Sicherungsring
- 220: Satellitenschlitten
- 222: Sicherungsausnehmung
- 224: Hebel
- 226: Drehlager
- 228: Feder
- 250: Abdeckung
- 252: Schraube
- 254: zylindrischer Abschnitt
- 256: Vorsprung
- 258: Lasche
- 260: Schraube

- A: Auswurfrichtung

## Patentansprüche

1. Auswurfeinheit (20) für zumindest einen Satelliten, insbesondere Picosatelliten, mit
einem Rahmen (22), der einen Innenraum zur Aufnahme des Satelliten definiert, und einer Rückhalteeinrichtung (30, 150) zum Halten des Satelliten in dem Innenraum, die derart ausgebildet ist, dass der Satellit von der Rückhalteeinrichtung freigebbar ist, wobei die Rückhalteeinrichtung einen Deckel (30) zum Verschließen des Innenraums umfasst und ein Bolzen (34) als Teil des Deckels (30) ausgebildet ist,
**dadurch gekennzeichnet, dass**
der Bolzen (34) verschiebbar ist und der Deckel (30) in einer Geschlossenstellung durch den verschiebbaren Bolzen (34) gegenüber dem Rahmen (22) freigebbar gesperrt ist, wobei ein Freigabemechanismus vorgesehen ist, durch den der Bolzen (34) aus einer Sperrstellung in eine Freigabestellung versetzbar ist.

2. Auswurfeinheit (20) nach Anspruch 1,
**dadurch gekennzeichnet, dass**
der Freigabemechanismus einen mit dem Bolzen (34) gekoppelten Schieber (50) umfasst, der in einer Sperrstellung vorgespannt gehalten wird und aus dieser freigebbar ist, um den Bolzen (30) in eine Freigabestellung zu verschieben.

3. Auswurfeinheit (20) nach Anspruch 2,
**dadurch gekennzeichnet, dass**
der Bolzen (30) durch ein Gestänge (46) gelenkig mit dem Schieber (50) verbunden ist, wobei der Schieber (50) und das Gestänge (46) ein Kniegelenk für den Bolzen (30) bilden.

4. Auswurfeinheit (20) nach einem der Ansprüche 1 bis 3,
**dadurch gekennzeichnet, dass**
zwei Bolzen (34a, 34b) vorgesehen sind, wobei insbesondere jeder Bolzen (34) durch eine Feder (36) in Richtung einer Freigabestellung vorgespannt ist und die Bolzen (34) durch ein Gestänge (46) in einer Sperrstellung kraftfrei gestellt sind.

5. Auswurfeinheit (20) nach Anspruch 3 oder 4,
**dadurch gekennzeichnet, dass**
jeder Bolzen (34) über ein eigenes Gestänge (46) mit einem Schieber (50) des Freigabemechanismus verbunden ist und die Gestänge (46) mit dem Schieber (50) ein doppeltes Kniegelenk bilden, welches die Bolzen (34) derart mit dem Schieber (50) koppelt, dass eine Bewegung eines Bolzens (34) in die Freigabestellung zu einer Bewegung des anderen Bolzens (34) in die Freigabestellung führt.

6. Auswurfeinheit (20) nach einem der Ansprüche 1 bis 5,
**dadurch gekennzeichnet, dass**
der Freigabemechanismus zumindest einen Kipphebel (64) umfasst, durch den der zumindest eine Bolzen (34) in einer Sperrstellung gehalten wird, insbesondere über einen zwischen den Kipphebel (64) und den Bolzen (34) geschalteten Schieber (50).

7. Auswurfeinheit (20) nach Anspruch 6,
**dadurch gekennzeichnet, dass**
zwei Kipphebel (64a, 64b) vorgesehen sind und ein vorgespanntes Element (50) des Freigabemechanismus einen Schwenkarm (52) umfasst, der in der Sperrstellung mit beiden Kipphebeln (64a, 64b) zum Abstützen des vorgespannten Elements (50) in Eingriff steht, wobei der Schwenkarm (52) derart verschwenkbar ist, dass durch Verkippen auch nur eines Kipphebels (64) in eine Freigabestellung das vorgespannte Element (50) aus der Sperrstellung freigebbar ist.

8. Auswurfeinheit (20) nach Anspruch 6 oder 7,
**dadurch gekennzeichnet, dass**
der zumindest eine Kipphebel (64) ein Drehlager (72) aufweist und durch ein vorgespanntes Element (50) des Freigabemechanismus belastet ist, welches eine Schräge (53) aufweist, durch die eine von dem vorgespannten Element (50) auf den Kipphebel (64) ausgeübte Kraft in Richtung des Drehlagers (72) verläuft.

9. Auswurfeinheit (20) nach einem der Ansprüche 1 bis 8,
**dadurch gekennzeichnet, dass**
der Bolzen (34) eine Schräge (96) zum Auflaufen auf ein rahmenseitiges Gegenlager (98) für den Bolzen (34) in der Sperrstellung aufweist, wobei das Gegenlager insbesondere ein Kugellager (98) ist.

10. Auswurfeinheit (20) nach Anspruch 8 oder 9,
**dadurch gekennzeichnet, dass**
in einer Sperrstellung der Bolzen (34) und das Gegenlager (98) in einer Auswurfrichtung gegeneinander vorgespannt sind.

11. Auswurfeinheit (20) nach einem der Ansprüche 1 bis 10,
**dadurch gekennzeichnet, dass**
zwei Bolzen (34a, 34b) und zwei Kipphebel (64a, 64b) des Freigabemechanismus symmetrisch in Bezug auf einen Schieber (50) des Freigabemechanismus angeordnet sind.

12. Auswurfeinheit (20) nach einem der vorhergehenden Ansprüche,
**dadurch gekennzeichnet, dass**
die Auswurfeinheit (20) eine Auswurfrichtung (A) definiert und die Rückhalteeinrichtung eine Fixiervorrichtung (150) umfasst, die zum Fixieren des Satelliten quer zur Auswurfrichtung (A) an den Satelliten angreift, wobei die Fixiervorrichtung (150) zumindest ein bewegbares Fixierelement (152) aufweist, welches translatorisch zwischen einer Fixierstellung und einer Freigabestellung bewegbar ist, wobei insbesondere zumindest ein Paar von Fixierelementen (152) vorgesehen ist, die in einer gemeinsamen Ebene wirksam sind, welche quer zur Auswurfrichtung (A) verläuft.

13. Auswurfeinheit (A) nach Anspruch 12,
**dadurch gekennzeichnet, dass**
eine Mehrzahl von Fixierelementen (152) oder eine Mehrzahl von Paaren von Fixierelementen (152) vorgesehen ist, die entlang der Auswurfrichtung (A) verteilt angeordnet sind.

14. Auswurfeinheit nach einem der Ansprüche 12 oder 13,
**dadurch gekennzeichnet, dass**
ein Federelement (174) vorgesehen ist, welches das oder jedes Fixierelement in der Fixierstellung gegen den Satelliten spannt.

15. Auswurfeinheit (20) nach einem der Ansprüche 12 bis 14,
**dadurch gekennzeichnet, dass**
die Fixiervorrichtung (150) eine Kulissenführung (154) für das Fixierelement (152) aufweist, durch die das Fixierelement (152) zwischen der Fixierstellung und der Freigabestellung bewegbar ist.

16. Auswurfeinheit (20) nach einem der Ansprüche 12 bis 15,
**dadurch gekennzeichnet, dass**
das Fixierelement (152) in einer Schiene (162) für den Satelliten und/oder für einen Satellitenschlitten (220) verschiebbar gelagert ist.

17. Auswurfeinheit (20) nach einem der Ansprüche 12 bis 16,
**dadurch gekennzeichnet, dass**
die Fixiervorrichtung (150) derart an einen Deckel (30) der Auswurfeinheit (20) gekoppelt ist, dass ein Öffnen des Deckels (30) ein Versetzen des oder jedes Fixierelements (152) in die Freigabestellung bewirkt.

18. Auswurfeinheit (20) nach einem der Ansprüche 12 bis 17,
**dadurch gekennzeichnet, dass**
die Fixiervorrichtung (152) zumindest zwei Elemente (152, 156) umfasst, die zum Fixieren und/oder Freigeben des Satelliten relativ zueinander entlang der Auswurfrichtung (A) verschiebbar sind, wobei insbesondere eines der Elemente als Hohlprofil (156) ausgebildet ist und eine Steuerstange (166) zum Steuern der Verschiebung des Elements relativ zu dem anderen Element vorgesehen ist, die durch das Hohlprofil (152) verläuft.

19. Auswurfeinheit (20) nach einem der vorhergehenden Ansprüche,
**gekennzeichnet durch**
eine mittels eines Hebels (224) sperrbare Auswurffeder und einen Riegel (186) zum Verriegeln des Hebels (224) in einer Sperrstellung, wobei der Riegel (186) schwimmend gelagert mit einem Deckel (30) der Auswurfeinheit (20) gekoppelt ist, wobei insbesondere der Riegel (186) über eine Feder (194) mit dem Deckel (30) gekoppelt ist.

## Claims

1. An ejection unit (20) for at least one satellite, in particular a picosatellite, comprising
a frame (22) which defines an inner space for receiving the satellite; and a retention device (30, 150) for holding the satellite in the inner space, said retention device (30, 150) being configured such that the satellite is releasable from the retention device, wherein the retention device comprises a cover (30) for closing the inner space and a bolt (34) is formed as part of the cover (30),
**characterized in that**
the bolt (34) is displaceable and the cover (30) is blocked in a closed position by the displaceable bolt (34) with respect to the frame (22) in a releasable manner, with a release mechanism being provided by which the bolt (34) is movable from a blocking position into a release position.

2. An ejection unit (20) in accordance with claim 1,
**characterized in that**
the release mechanism comprises a slider (50) which is coupled to the bolt (34), which is held preloaded in a blocking position and which is releasable therefrom to displace the bolt (34) into a release position.

3. An ejection unit (20) in accordance with claim 2,
**characterized in that**
the bolt (34) is connected by a linkage (46) in an articulated manner to the slider (50), with the slider (50) and the linkage (46) forming an elbow joint for the bolt (34).

4. An ejection unit (20) in accordance with any one of the claims 1 to 3,
**characterized in that**
two bolts (34a, 34b) are provided, with in particular each bolt (34) being preloaded by a spring (36) in the direction of a release position and the bolts (34) being set force free in a blocking position by a linkage (46).

5. An ejection unit (20) in accordance with claim 3 or claim 4,
**characterized in that**
each bolt (34) is connected via a separate linkage (46) to a slider (50) of the release mechanism and the linkages (46) form a double elbow joint with the slider (50), said double elbow joint coupling the bolts (34) to the slider (50) such that a movement of a bolt (34) into the release position results in a movement of the other bolt (34) into the release position.

6. An ejection unit (20) in accordance with any one of the claims 1 to 5,
**characterized in that**
the release mechanism comprises at least one rocker lever (64) by which the at least one bolt (34) is held in a blocking position, in particular via a slider (50) interposed between the rocker lever (64) and the bolt (34).

7. An ejection unit (20) in accordance with claim 6,
**characterized in that**
two rocker levers (64a, 64b) are provided and a preloaded element (50) of the release mechanism comprises a pivot arm (52) which is in engagement with both rocker levers (64a, 64b) in the blocking position to support the preloaded element (50), with the pivot arm (52) being pivotable such that the preloaded element (50) can be released from the blocking position by tilting even only one rocker lever (64) into a release position.

8. An ejection unit (20) in accordance with claim 6 or claim 7,
**characterized in that**
the at least one rocker lever (64) has a pivot bearing (72) and is loaded by a preloaded element (50) of the release mechanism which has a slope (53) by which a force exerted onto the rocker lever (64) by the preloaded element (50) extends in the direction of the pivot bearing (72).

9. An ejection unit (20) in accordance with any one of the claims 1 to 8,
**characterized in that**
the bolt (34) has a slope (96) for running onto a frame-side counter-bearing (98) for the bolt (34) in the blocking position, with the counter-bearing in particular being a ball bearing (98).

10. An ejection unit (20) in accordance with claim 8 or claim 9,
**characterized in that**,
in a blocking position, the bolt (34) and the counter-bearing (98) are preloaded against each other in an ejection direction.

11. An ejection unit (20) in accordance with any one of the claims 1 to 10,
**characterized in that**
two bolts (34a, 34b) and two rocker levers (64a, 64b) of the release mechanism are arranged symmetrically with respect to a slider (50) of the release mechanism.

12. An ejection unit (20) in accordance with any one of the preceding claims,
**characterized in that**
the ejection unit (20) defines an ejection direction (A) and the retention device comprises a fixing apparatus (150) which engages at the satellite for fixing the satellite transversely to the ejection direction (A),
with the fixing apparatus (150) having at least one movable fixing element (152) which is movable in a translatory manner between a fixing position and a release position, with in particular at least a pair of fixing elements (152) being provided which are active in a common plane which extends transversely to the ejection direction (A).

13. An ejection unit (20) in accordance with claim 12,
**characterized in that**
a plurality of fixing elements (152) or a plurality of pairs of fixing elements (152) are provided which are arranged distributed along the ejection direction (A).

14. An ejection unit in accordance with one of the claims 12 or 13,
**characterized in that**
a spring element (174) is provided which clamps the or each fixing element in the fixing position against the satellite.

15. An ejection unit (20) in accordance with any one of the claims 12 to 14,
**characterized in that**
the fixing apparatus (150) has a slot guide (154) for the fixing element (152) by which the fixing element (152) is movable between the fixing position and the release position.

16. An ejection unit (20) in accordance with any one of the claims 12 to 15,
**characterized in that**
the fixing element (152) is displaceably supported in a rail (162) for the satellite and/or for a satellite platform (220).

17. An ejection unit (20) in accordance with any one of the claims 12 to 16,
**characterized in that**
the fixing apparatus (150) is coupled to a cover (30) of the ejection unit (20) such that an opening of the cover (30) effects a moving of the or each fixing element (152) into the release position.

18. An ejection unit (20) in accordance with any one of the claims 12 to 17,
**characterized in that**
the fixing apparatus (152) comprises at least two elements (152, 156) which are displaceable relative to one another along the ejection direction (A) for fixing and/or releasing the satellite, with in particular one of the elements being configured as a hollow section (156) and a control bar (166) being provided for controlling the displacement of the element relative to the other element, said control bar (166) extending through the hollow section (152).

19. An ejection unit (20) in accordance with any one of the preceding claims,
**characterized by**
an ejection spring blockable by means of a lever (224) and a latch (186) for locking the lever (224) in a blocking position, with the latch (186) being coupled to a cover (30) of the ejection unit (20) supported in a floating manner, with in particular the latch (186) being coupled to the cover (30) via a spring (194).

## Revendications

1. Unité d'expulsion (20) pour au moins un satellite, en particulier un picosatellite, comportant
un cadre (22) qui définit un volume intérieur pour recevoir le satellite, et un moyen de retenue (30, 150) destiné à retenir le satellite dans le volume intérieur et réalisé de telle sorte que le satellite est susceptible d'être libéré du moyen de retenue, le moyen de retenue comprenant un couvercle (30) pour refermer le volume intérieur, et un goujon (34) étant réalisé comme partie du couvercle (30),
**caractérisée en ce que**
le goujon (34) est mobile en translation et le couvercle (30) est bloqué dans une position fermée par le goujon mobile (34) de manière à pouvoir être libéré par rapport au cadre (22), et
il est prévu un mécanisme de libération permettant de décaler le goujon (34) depuis une position bloquée jusque dans une position libérée.

2. Unité d'expulsion (20) selon la revendication 1,
**caractérisée en ce que**
le mécanisme de libération comprend un poussoir (50) couplé au goujon (34) et maintenu précontraint dans une position bloquée et pouvant être libéré de celle-ci pour translater le goujon (30) jusque dans une position libérée.

3. Unité d'expulsion (20) selon la revendication 2,
**caractérisée en ce que**
le goujon (30) est relié en articulation au poussoir (50) par une tringle (46), le poussoir (50) et la tringle (46) formant une genouillère pour le goujon (30).

4. Unité d'expulsion (20) selon l'une des revendications 1 à 3,
**caractérisée en ce que**
il est prévu deux goujons (34a, 34b), en particulier chaque goujon (34) étant précontraint par un ressort (36) en direction d'une position libérée, et les goujons (34) étant mis à l'état exempt de force par une tringle (46), dans une position bloquée.

5. Unité d'expulsion (20) selon la revendication 3 ou 4,
**caractérisée en ce que**
chaque goujon (34) est relié à un poussoir (50) du mécanisme de libération par une propre tringle (46), et les tringles (46) forment, conjointement avec le poussoir (50), une genouillère double qui couple les goujons (34) au poussoir (50) de telle sorte qu'un mouvement d'un goujon (34) jusque dans la position libérée mène à un mouvement de l'autre goujon (34) jusque dans la position libérée.

6. Unité d'expulsion (20) selon l'une des revendications 1 à 5,
**caractérisée en ce que**
le mécanisme de libération comprend au moins un levier basculant (64) par lequel ledit au moins un goujon (34) est maintenu dans une position bloquée, en particulier par un poussoir (50) interposé entre le levier basculant (64) et le goujon (34).

7. Unité d'expulsion (20) selon la revendication 6,
**caractérisée en ce que**
il est prévu deux leviers basculants (64a, 64b), et un élément précontraint (50) du mécanisme de libération comprend un bras pivotant (52) qui, dans la position bloquée, est en engagement avec les deux leviers basculants (64a, 64b) pour soutenir l'élément précontraint (50), le bras pivotant (52) étant mobile en pivotement de telle sorte que l'élément précontraint (50) est susceptible d'être libéré de la position bloquée par basculement même d'un seul levier basculant (64) jusque dans une position libérée.

8. Unité d'expulsion (20) selon la revendication 6 ou 7,
**caractérisée en ce que**
ledit au moins un levier basculant (64) comprend un palier rotatif (72) et est chargé par un élément précontraint (50) du mécanisme de libération, qui présente un chanfrein (53) par lequel une force exercée par l'élément précontraint (50) sur le levier basculant (64) s'étend en direction du palier rotatif (72).

9. Unité d'expulsion (20) selon l'une des revendications 1 à 8,
**caractérisée en ce que**
le goujon (34) présente un chanfrein (96) pour monter sur un palier antagoniste (98) côté cadre pour le goujon (34) dans la position bloquée, le palier antagoniste étant en particulier un roulement à billes (98).

10. Unité d'expulsion (20) selon la revendication 8 ou 9,
**caractérisée en ce que**
dans une position bloquée, le goujon (34) et le palier antagoniste (98) sont précontraints l'un contre l'autre dans une direction d'expulsion.

11. Unité d'expulsion (20) selon l'une des revendications 1 à 10,
**caractérisée en ce que**
deux goujons (34a, 34b) et deux leviers basculants (64a, 64b) du mécanisme de libération sont agencés symétriquement par rapport à un poussoir (50) du mécanisme de libération.

12. Unité d'expulsion (20) selon l'une des revendications précédentes,
**caractérisée en ce que**
l'unité d'expulsion (20) définit une direction d'expulsion (A) et le moyen de retenue comprend un dispositif de fixation (150) qui attaque le satellite pour fixer le satellite transversalement à la direction d'expulsion (A), le dispositif de fixation (150) comprenant au moins un élément de fixation mobile (152) qui est mobile en translation entre une position fixée et une position libérée, et il est prévu en particulier au moins une paire d'éléments de fixation (152) qui agissent dans un plan commun s'étendant transversalement à la direction d'expulsion (A).

13. Unité d'expulsion (A) selon la revendication 12,
**caractérisée en ce que**
il est prévu une pluralité d'éléments de fixation (152) ou une pluralité de paires d'éléments de fixation (152) qui sont agencés en répartition le long de la direction d'expulsion (A).

14. Unité d'expulsion selon l'une des revendications 12 ou 13,
**caractérisée en ce que**
il est prévu un élément élastique (174) qui serre le ou chaque élément de fixation contre le satellite, dans la position fixée.

15. Unité d'expulsion (20) selon l'une des revendications 12 à 14,
**caractérisée en ce que**
le dispositif de fixation (150) comprend un guidage à coulisse (154) pour l'élément de fixation (152), qui permet de déplacer l'élément de fixation (152) entre la position fixée et la position libérée.

16. Unité d'expulsion (20) selon l'une des revendications 12 à 15,
**caractérisée en ce que**
l'élément de fixation (152) est monté mobile en translation dans un rail (162) pour le satellite et/ou pour un chariot de satellite (220).

17. Unité d'expulsion (20) selon l'une des revendications 12 à 16,
**caractérisée en ce que**
le dispositif de fixation (150) est couplé à un couvercle (30) de l'unité d'expulsion (20) de telle sorte qu'une ouverture du couvercle (30) provoque un décalage du ou de chaque élément de fixation (152) jusque dans la position libérée.

18. Unité d'expulsion (20) selon l'une des revendications 12 à 17,
**caractérisée en ce que**
le dispositif de fixation (152) comprend deux éléments (152, 156) qui sont mobiles en translation l'un par rapport à l'autre le long de la direction d'expulsion (A) pour fixer et/ou libérer le satellite, en particulier l'un des éléments étant réalisé sous forme de profilé creux (156), et
il est prévu une tige de commande (166) pour commander la translation de l'élément par rapport à l'autre élément, qui traverse le profilé creux (152).

19. Unité d'expulsion (20) selon l'une des revendications précédentes,
**caractérisée par**
un ressort d'expulsion susceptible d'être bloqué à l'aide d'un levier (224), et par
un verrou (186) pour verrouiller le levier (224) dans une position bloquée, le verrou (186) étant couplé à un couvercle (30) de l'unité d'expulsion (20) en étant monté flottant, en particulier le verrou (186) étant couplé au couvercle (30) par un ressort (194).
